# EUROPÄISCHE PATENTANMELDUNG

(11) **EP 4 395 456 A2**
(43) Veröffentlichungstag der Anmeldung: **03.07.2024**
(21) Anmeldenummer: 24162942.7
(22) Anmeldetag: 25.08.2020
(51) Int. Cl.: H05B 3/34

(54) **FLÄCHIGES HEIZMODUL, FLACH-HEIZKÖRPER, PFLASTERPLATTE, PFLASTERSYSTEM UND VERFAHREN ZUR HERSTELLUNG DES HEIZMODULS**

(62) Teilanmeldung aus: 20192583.1
(71) Anmelder: CT-Coating AG, 53639 Königswinter (DE)
(72) Erfinder:
(74) Vertreter: Müller-Boré & Partner Patentanwälte PartG mbB

(57) **Zusammenfassung**

Die Erfindung betrifft ein flächiges Heizmodul (200), wobei sich das Heizmodul (200) flächig entlang einer Heizmodulebene (HE) erstreckt. Das Heizmodul (200) umfasst eine entlang der Heizmodulebene (HE) ausgerichtete, flächige Heizschicht (290) zur Beheizung einer Umgebung des Heizmoduls (200) und eine entlang der Heizmodulebene (HE) ausgerichtete, flächige Energiespeicherschicht (220) zur Speicherung elektrischer Energie, wobei zwischen der Heizschicht (290) und der Energiespeicherschicht (220) eine entlang der Heizmodulebene (HE) ausgerichtete, flächige thermische Isolierschicht (240) angeordnet ist, und/oder eine flächige, entlang der Heizmodulebene (HE) ausgerichtete Photovoltaikschicht (280) zur Gewinnung elektrischer Energie. Die Heizschicht (290) und Energiespeicherschicht (220) und/oder die Photovoltaikschicht (280) umfassen jeweils eine Mehrzahl von entlang der Heizmodulebene (HE) ausgerichteten Materiallagen mit voneinander unterschiedlichen Materialzusammensetzungen. Die Erfindung betrifft ferner einen Flach-Heizkörper, eine Pflasterplatte (300) und ein Pflastersystem mit dem Heizmodul (200) sowie ein Verfahren zur Herstellung des Heizmoduls (200).

## Beschreibung

### Technisches Gebiet

Die Erfindung betrifft ein flächiges Heizmodul, wobei sich das Heizmodul flächig entlang einer Heizmodulebene erstreckt. Die Erfindung betrifft ferner einen Flach-Heizkörper und eine Pflasterplatte mit dem Heizmodul, ein Pflastersystem mit einer Vielzahl der Pflasterplatten und ein Verfahren zur Herstellung des Heizmoduls.

### Stand der Technik

Aus dem Stand der Technik sind Heizmodule, beispielsweise in elektrischen Heizkörpern zum Beheizen eines Raumes, bekannt. Nachteilig an bekannten Heizmodulen sind vor allem ihr hohes Gewicht und ihr hoher Platzbedarf.

Die Patentanmeldung EP 2 854 486 A1 offenbart ein Flächenelement zum Leuchten und Heizen mit einer Heizschicht, die von einer Beleuchtungsschicht durch eine elektrische Isolierungsschicht oder wärmeleitende Keramikschicht getrennt ist. Als vorteilhafte Schichtdicken werden für die Heizschicht 6 µm bis 60 µm, für die Isolierungsschicht 1 µm bis 15 µm und für die Keramikschicht 3 µm bis 30 µm angegeben, sodass sich insgesamt ein sehr dünnes Flächenelement ergibt. Die Heizschicht kann zur Erzeugung einer Temperatur von über 250 °C ausgelegt sein. Nachteilig an dem Flächenelement ist, dass es zum Betrieb an eine externe Energiequelle angeschlossen werden muss, die nicht an jedem Anwendungsort verfügbar ist.

Die Druckschrift DE 203 19 024 U1 beschreibt ein Flächenheizelement als Widerstandsheizung mit einem mehrschichtigen Aufbau. Das Flächenheizelement umfasst eine Heizschicht und eine sich daran anschließende elektrische Isolierschicht. Die Heizschicht hat beispielsweise eine Dicke von 10 µm bis 50 µm und die Isolierschicht beispielsweise 20 µm bis 200 µm. Das Flächenheizelement kann eine Heizintensität von 30 W/cm² aufweisen. Das Flächenheizelement ist also ebenfalls sehr dünn und muss zum Betrieb an eine externe Energieversorgung angeschlossen werden.

Die Druckschrift WO 93/23968 A1 beschreibt eine Heizvorrichtung mit einer Dünnschichtbatterie und einer Heizeinheit mit einer Schicht aus einem elektrisch leitfähigen Polymer. Die Batterie ist vorzugsweise als fertiges Bauteil zugekauft und als flüssigkeitsfreie Batterie ausgestaltet. Gemäß WO 93/23968 A1 ist es vorteilhaft, die Batterie nahe der Heizeinheit, insbesondere ohne thermische Isolierung dazwischen, anzuordnen, um eine größere Energiemenge aus der Batterie nutzen zu können. Nachteilig an der Heizvorrichtung ist der aufwändige Zusammenbau der Heizeinheit mit der Batterie.

### Technische Aufgabe

Die Aufgabe der Erfindung ist es, ein kostengünstiges, effizientes, platzsparendes und vielseitig einsetzbares Heizmodul zu schaffen.

### Technische Lösung

Der Gegenstand der vorliegenden Erfindung stellt ein Heizmodul gemäß Anspruch 1 bereit, das die technische Aufgabe löst. Ebenso wird die Aufgabe durch einen Flach-Heizkörper gemäß Anspruch 9, eine Pflasterplatte gemäß Anspruch 10, ein Pflastersystem gemäß Anspruch 13 und ein Verfahren zur Herstellung des Heizmoduls gemäß Anspruch14 gelöst. Vorteilhafte Ausgestaltungen ergeben sich aus den abhängigen Ansprüchen.

### Beschreibung der Ausführungsarten

Die Erfindung betrifft ein flächiges Heizmodul, wobei sich das Heizmodul flächig entlang einer Heizmodulebene erstreckt. Das heißt, eine Länge und eine zu der Länge orthogonale Breite des Heizmoduls entlang der Heizmodulebene sind jeweils wesentlich größer als eine Höhe des Heizmoduls senkrecht zur Heizmodulebene. Beispielsweise sind die Länge und/oder die Breite zumindest zehnmal so groß, insbesondere zumindest hundertmal so groß, wie die Höhe.

Das Heizmodul kann beispielsweise im Wesentlichen quaderförmig sein.

Das Heizmodul umfasst zumindest eine entlang der Heizmodulebene ausgerichtete, flächige Heizschicht zur Beheizung einer Umgebung des Heizmoduls.

Die Heizschicht hat beispielsweise eine Dicke senkrecht zur Heizmodulebene von 6 µm bis 60 µm. Die Heizschicht enthält beispielsweise Kohlenstoff-Nanoröhrchen, organische Lösungen, Emulgatoren, Verdicker, Verdünner, Konditionierer, Viskositätsmittel, Kleber und/oder Anti-Oxidationsmittel. Die als Heizschicht eingesetzten Materialien wandeln vorteilhafterweise nahezu 100 % der über die Heizspannung eingespeisten elektrischen Energie in Wärme um.

Die Heizschicht ist vorzugsweise zum Heizen bis zu einer Maximaltemperatur von 523 K ausgebildet.

Die Heizschicht umfasst beispielsweise eine Anzahl von Leiterbahnen, die senkrecht zur Heizmodulebene zwischen zwei elektrischen Isolierlagen eingebettet sind. Die Heizschicht kann beispielsweise so aufgebaut sein, wie das in DE 203 19 024 U1 beschriebene Flächenheizelement oder die in WO 93/23968 A1 beschriebene Widerstands-Heizeinheit ("resistor heating unit 19"). Die entsprechenden Absätze [0016] bis [0026] von DE 203 19 024 U1 sowie die Figuren 7a und 7b mit deren Beschreibung auf Seite 12 von WO 93/23968 A1 sind hier durch Bezugnahme aufgenommen.

Das Heizmodul umfasst vorzugsweise zumindest eine entlang der Heizmodulebene ausgerichtete, flächige Energiespeicherschicht zur Speicherung elektrischer Energie, wobei zwischen der Heizschicht und der Energiespeicherschicht eine entlang der Heizmodulebene ausgerichtete, flächige thermische Isolierschicht angeordnet ist.

Durch die Energiespeicherschicht kann das Heizmodul vorteilhafterweise unabhängig von einer externen Energieversorgung betrieben werden, beispielsweise beim Camping. Weiterhin kann die Energiespeicherschicht dann aufgeladen werden, wenn besonders viel und kostengünstige elektrische Energie, beispielsweise aus Windkraftanlagen oder Photovoltaikanlagen, verfügbar ist, und die gespeicherte Energie kann zu einem späteren Zeitpunkt, wenn weniger elektrische Energie verfügbar ist, verbraucht werden. Dadurch werden die Betriebskosten des Heizmoduls minimiert und Schwankungen in der Energieversorgung ausgeglichen, ohne dass dazu ein zusätzlicher, teurer und platzraubender Energiespeicher notwendig wäre.

Die Integration einer Energiespeicherschicht in ein Heizmodul ist dadurch erschwert, dass die meisten fachüblichen Energiespeicher, insbesondere aufgrund der darin enthaltenen Flüssigkeiten, keinen hohen Temperaturen von beispielsweise über 60 °C, insbesondere über 85 °C, ausgesetzt werden dürfen.

Die thermische Isolierschicht schützt die Energiespeicherschicht vor einer Überhitzung durch die Heizschicht, insbesondere wenn die Heizschicht mit einer hohen Temperatur betrieben wird, um mit einem kompakten Heizmodul einen großen Raum zu beheizen.

Das Heizmodul umfasst vorzugsweise zumindest eine flächige, entlang der Heizmodulebene ausgerichtete Photovoltaikschicht zur Gewinnung elektrischer Energie. Mit Hilfe der Photovoltaikschicht kann die Heizschicht vorteilhafterweise ohne externe Energieversorgung mit Energie versorgt werden. Selbstverständlich kann das Heizmodul auch wenn eine Photovoltaikschicht vorhanden ist, dennoch einen Anschluss für eine externe Energieversorgung umfassen, um die Heizschicht zu versorgen und/oder von der Photovoltaikschicht gewonnenen Energie an die externe Energieversorgung abzugeben.

Vorzugsweise umfasst das Heizmodul zumindest eine Energiespeicherschicht und zumindest eine Photovoltaikschicht. Dadurch kann die von der Photovoltaikschicht gewonnene Energie in der Energiespeicherschicht zwischengespeichert und zu einem späteren Zeitpunkt, insbesondere während die Photovoltaikschicht keine ausreichende Leistung zum Betrieb der Heizschicht liefert, zum Betrieb der Heizschicht verwendet werden.

Die zumindest eine Heizschicht und die zumindest eine Energiespeicherschicht und/oder die zumindest eine Photovoltaikschicht, insbesondere alle genannten Schichten, umfassen vorzugsweise jeweils eine Mehrzahl von entlang der Heizmodulebene ausgerichteten Materiallagen mit voneinander unterschiedlichen Materialzusammensetzungen.

Durch den Aufbau der Schichten aus entlang der Heizmodulebene ausgerichteten Materiallagen können die Schichten besonders einfach, schnell und kostengünstig hergestellt werden, beispielsweise mit einem Druckverfahren, insbesondere mit einem Siebdruckverfahren.

Vorzugsweise erstrecken sich die Materiallagen jeweils über eine gesamte Fläche des Heizmoduls entlang der Heizmodulebene. Dadurch können die Materiallagen auf besonders einfache Weise hergestellt werden.

Die Photovoltaikschicht ist vorzugsweise als low-light-condition-Solarmodul und/oder als Dünnschichtsolarmodul ausgestaltet, umfassend beispielsweise amorphes Silicium (a-Si:H), mikrokristallines Silicium (µc-Si:H), Gallium-Arsenid (GaAs), Cadmiumtellurid (CdTe) oder Kupfer-Indium-(Gallium)-Schwefel-Selen-Verbindungen als photoaktives Material.

In einer weiteren vorteilhaften Ausführungsform umfasst die Photovoltaikschicht senkrecht zur Heizmodulebene übereinander wenigstens eine transluzente Frontelektrodenlage und/oder danach mittelbar oder unmittelbar wenigstens eine Trägerstrukturlage zur mechanischen Stabilisierung und/oder danach mittelbar oder unmittelbar wenigstens eine Photoaktivlage mit einem photoaktiven Material und/oder danach mittelbar oder unmittelbar wenigstens eine Transportlage und/oder danach mittelbar oder unmittelbar wenigstens eine Backelektrodenlage und/oder danach mittelbar oder unmittelbar wenigstens eine Verkapselungslage, wobei zwischen transparenter Frontelektrodenlage und Backelektrodenlage vorteilhaft eine Spannung anlegbar ist.

Denkbar ist, dass dabei auf die Transportlage und die Trägerstrukturlage verzichtet wird. Dies ist vorteilhaft, da auf diese Weise eine besonders dünne Ausführungsform möglich ist. Nachteilig ist die jedoch, da die Transportlage zur Aufrechterhaltung der Ladungstrennung besonders gute Eigenschaften aufweist. Zudem ist es denkbar, dass das photoaktive Material ohne eine stabilisierende Trägerstrukturlage seine Wirkung einbüßt. Für die Trägerstrukturlage sind beispielsweise Gläser, PMMA, Metallfolien, Plastikfolien denkbar. Für die Transportlage sind negative und positive Ausbildungen aus organischen und/oder anorganischen Stoffen denkbar. Sie haben die Aufgabe, die Elektronen besser zu transportieren.

Vorteilhaft ist die Verkapselungslage als elektrische Isolationslage, beispielsweise aus einem Kunststoff, ausgebildet. Wenn die Photovoltaikschicht an eine weitere Schicht angrenzt, die an einer der Photovoltaikschicht zugewandten Seite eine Verkapselungslage aufweist, kann die Photovoltaikschicht vorteilhafterweise an der der weiteren Schicht zugewandten Seite ohne Verkapselungslage ausgestaltet sein. Dadurch ist eine besonders materialsparende und schnelle Herstellung möglich.

Die zur Backelektrode angrenzende Verkapselungslage weist vorteilhaft eine Dicke zwischen 500 nm und 250 µm auf. Die Backelektrodenlage weist vorteilhaft eine Dicke zwischen 100 nm und 15 µm auf. Die Transportlage weist vorteilhaft eine Dicke zwischen 50 nm und 5 µm auf. Die Photoaktivlage weist vorteilhaft eine Dicke zwischen 50 nm und 5 µm auf. Die Trägerstrukturlage weist vorteilhaft eine Dicke zwischen 100 nm und 5 µm auf. Die Frontelektrodenlage weist vorteilhaft eine Dicke zwischen 100 nm und 5 µn auf. Die zur Frontelektrode angrenzende Verkapselungslage weist vorteilhaft eine Dicke zwischen 20 µm und 250 µm auf.

Die Energiespeicherschicht ist vorzugsweise gegenüber einer Temperatur von zumindest 60 °C, insbesondere zumindest 85 °C, bevorzugt zumindest 120 °C, beständig. Durch diese gegenüber fachüblichen Energiespeichern, beispielsweise Lithium-Ionen-Akkumulatoren, erhöhte Wärmebeständigkeit kann die Energiespeicherschicht vorteilhafterweise in einem kompakten Heizmodul mit der Heizschicht kombiniert werden, ohne dass die Energiespeicherschicht durch von der Heizschicht abgegebene Wärme beschädigt wird.

Die Energiespeicherschicht kann flüssigkeitsfrei ausgebildet sein, Natrium-Ionen und insbesondere keine Lithium-Ionen als bewegliche Ladungsträger enthalten und/oder frei von Fehlstellen (sogenannten "Pinholes") ausgebildet sein. Jedes dieser Merkmale und insbesondere eine Kombination mehrerer dieser Merkmale erhöht vorteilhafterweise die Wärmebeständigkeit der Energiespeicherschicht.

Die Energiespeicherschicht umfasst vorzugsweise wenigstens zwei Elektrodenlagen, dazwischen wenigstens eine Separatorlage mit einem Elektrolyten und an den Außenseiten je wenigstens eine Verkapselungslage. Vorteilhaft ist die Verkapselungslage jeweils als elektrische Isolationslage, beispielsweise aus einem Kunststoff, ausgebildet.

Wenn die Energiespeicherschicht an eine weitere Schicht angrenzt, die an einer der Energiespeicherschicht zugewandten Seite eine Verkapselungslage aufweist, kann die Energiespeicherschicht vorteilhafterweise an der der weiteren Schicht zugewandten Seite ohne Verkapselungslage ausgestaltet sein. Dadurch ist eine besonders materialsparende und schnelle Herstellung möglich.

Zumindest eine Elektrodenlage umfasset vorzugsweise ein Metall, insbesondere Lithium oder Natrium, Kohlenstoff, insbesondere in Form von Aktivkohle, Aktivkohlefaser, Carbid-abgeleitetem Kohlenstoff, Kohlenstoff-Aerogel, Graphit, Graphen und/oder Kohlenstoffnanoröhren, ein Übergangsmetalloxid, beispielsweise ein Oxid von Ruthenium, Iridium, Eisen und/oder Mangan, und/oder ein elektrisch leitfähiges Polymer, beispielsweise Polypyrrol, Polyanilin, Pentacen oder Polythiophen.

Die Separatorlage umfasst beispielsweise einen porösen Kunststoff und/oder eine poröse Keramik. Der Elektrolyt umfasst beispielsweise eine wässrige Elektrolytlösung, eine organische Elektrolytlösung, eine ionische Flüssigkeit, einen superkonzentrierten Elektrolyten, ein für Ionen leitfähiges Polymer und/oder eine für Ionen leitfähige Keramik, z.B. Ag₄Rbl₅ für den Ladungstransport von Ag⁺-Ionen, ein closo-Boran für den Ladungstransport von Na⁺-Ionen oder eine LiI/Al₂O₃-Mischung für den Ladungstransport von Li⁺-Ionen.

Die Energiespeicherschicht ist vorzugsweise als Festkörperakkumulator, beispielsweise als Lithium-Luft-Festkörperakkumulator, oder als Superkondensator ausgebildet.

Eine Dicke senkrecht zur Heizmodulebene beträgt für die Verkapselungslagen vorteilhaft 20 µm bis 250 µm, für die Elektrodenlagen vorteilhaft 3 µm bis 250 µm und/oder für die Separatorlage vorteilhaft 0,5 µm bis 250 µm.

Die zumindest eine Heizschicht und die zumindest eine Energiespeicherschicht und/oder die zumindest eine Photovoltaikschicht sind vorzugsweise senkrecht zur Heizmodulebene übereinander angeordnet. Dadurch lassen sich die Schichten besonders einfach, beispielsweise mit einem Druckverfahren, insbesondere mit einem Siebdruckverfahren, nacheinander auf ein Substrat aufbringen.

Eine Schichtdicke der zumindest einen Heizschicht, der zumindest einen Energiespeicherschicht und/oder der zumindest einen Photovoltaikschicht senkrecht zur Heizmodulebene beträgt vorzugsweise jeweils von 0,1 µm bis 1 mm, bevorzugt von 0,5 µm bis 0,2 mm.

Die zumindest eine Heizschicht, die zumindest eine Energiespeicherschicht, die zumindest eine thermische Isolierschicht und/oder die zumindest eine Photovoltaikschicht, bevorzugt das gesamte Heizmodul, ist vorzugsweise flexibel ausgestaltet. Dadurch wird vorteilhafterweise eine Gefahr von Beschädigungen durch mechanische Belastungen verringert.

Die Isolierschicht umfasst vorzugsweise ein Calcium-Silikat, Chitosan und einen hitzebeständigen Binder. Mit den genannten Inhaltsstoffen lässt sich auf einfache Weise, beispielsweise durch Siebdrucken, eine besonders dünne und flexible Isolierschicht mit einer geringen Wärmeleitfähigkeit herstellen.

Die Isolierschicht kann PET, PVC, organische Lösungen, Emulgatoren, Verdicker, Verdünner, Konditionierer, Viskositätsmittel, Kleber und/oder Anti-Oxidationsmittel umfassen.

Die Isolierschicht weist vorzugsweise eine Schichtdicke von 10 µm bis 500 µm, bevorzugt von 40 µm bis 100 µm, auf.

Das Heizmodul umfasst vorzugsweise zumindest eine entlang der Heizmodulebene ausgerichtete, flächige, bevorzugt flexible, Leuchtschicht zur Beleuchtung einer Umgebung des Heizmoduls, wobei die Leuchtschicht eine Mehrzahl von entlang der Heizmodulebene ausgerichteten Materiallagen mit voneinander unterschiedlichen Materialzusammensetzungen umfasst.

Durch die zusätzliche Integration der Leuchtschicht in das Heizmodul kann eine Umgebung des Heizmoduls ohne separate Leuchten beleuchtet werden, sodass die Beheizung und Beleuchtung der Umgebung mit besonders geringem Investitions- und Platzbedarf sichergestellt werden kann.

Bei einer vorteilhaften Ausführungsform ist die Photovoltaikschicht als zumindest bereichsweise transluzente, insbesondere transparente, Schicht ausgebildet, insbesondere derart, dass senkrecht zur Heizmodulebene die wenigstens eine Leuchtschicht und die Photovoltaikschicht übereinander angeordnet sind. Wenn die Photovoltaikschicht transluzent ausgebildet ist, kann sie bei Abnahme des einstrahlenden Lichtes, zum Beispiel in der Abenddämmerung, als durchlässige Schicht für das Licht der Leuchtschicht Verwendung finden.

Dabei ist denkbar, dass eine Durchkontaktierung zwischen der Photovoltaikschicht und einer Energiespeicherschicht durch die Leuchtschicht hindurch das Übertragen der in der Photovoltaikschicht erzeugten elektrischen Energie in die Energiespeicherschicht ermöglicht. Eine weitere Kontaktierung ermöglicht vorteilhaft das Freisetzen der in der Energiespeicherschicht gespeicherten Energie für die Versorgung der Leuchtschicht.

In einer weiteren vorteilhaften Ausführungsform ist die wenigstens eine Photovoltaikschicht opak ausgebildet. Dies ist besonders vorteilhaft, da Photovoltaikschichten, die nicht transparent ausgebildet sind, einen größeren Wirkungsgrad gegenüber transparenten Photovoltaikschichten aufweisen.

Die Photovoltaikschicht und die Leuchtschicht können entlang der Heizmodulebene nebeneinander oder ineinander angeordnet sein, damit sie sich nicht gegenseitig bei einer Lichtaufnahme beziehungsweise Lichtabgabe senkrecht zur Heizmodulebene behindern. Nachteilig dabei ist, dass nicht jeweils die ganze Fläche des Heizmoduls für die Photovoltaikschicht und die Leuchtschicht zur Verfügung steht. Vorteilhaft ist, dass eine Energiespeicherschicht sowohl angrenzend zu der Photovoltaikschicht als auch angrenzend zu der Leuchtschicht angeordnet werden kann, was einen besonders effizienten Energietransport ermöglicht.

Vorzugsweise ist eine Induktionsschicht des Heizmoduls und/oder die zumindest eine Energiespeicherschicht zumindest bereichsweise transluzent, insbesondere transparent. Durch diese Ausgestaltungen kann Licht von der Leuchtschicht oder Photovoltaikschicht durch die Energiespeicherschicht und/oder Induktionsschicht hindurch aufgenommen oder abgegeben werden, sodass die Schichtabfolge beispielsweise für eine möglichst einfache Herstellung oder eine effiziente Verbindung der einzelnen Schichten optimiert sein kann.

Das Heizmodul umfasst vorzugsweise zumindest ein sich flächig entlang der Heizmodulebene erstreckendes, bevorzugt flexibles Trägerelement, auf das zumindest die zumindest eine Heizschicht, die zumindest eine Energiespeicherschicht und/oder die zumindest eine Photovoltaikschicht, beispielsweise mit einem Siebdruckverfahren, aufgebracht sind.

Die Schichten können einseitig oder beidseitig auf den Flächenseiten des Trägerelements aufgebracht sein. Eine einseitige Aufbringung erlaubt eine besonders schnelle Herstellung. Eine beidseitige Aufbringung sorgt durch die Anordnung des Trägerelements zwischen den Schichten für eine besonders hohe mechanische Stabilität. Beispielsweise können die Heizschicht auf einer Flächenseite und eine Energiespeicherschicht auf der gegenüberliegenden Flächenseite des Trägerelements aufgebracht sein, wodurch das Trägerelement vorteilhafterweise zur thermischen Isolierung der Energiespeicherschicht von der Heizschicht beiträgt.

Das Trägerelement umfasst beispielsweise einen Kunststoff, insbesondere PET, ein Polyimid, PMMA und/oder ein Polycarbonat, und/oder ein Metall. Vorteilhafterweise ist das Trägerelement rechteckig ausgebildet. Das Trägerelement ist vorzugsweise folienartig und biegsam ausgestaltet. Dadurch kann das gesamte Heizmodul dünn und biegsam ausgestaltet werden. Das Trägerelement umfasst beispielsweise eine Kunststofffolie und/oder Metallfolie mit einer Dicke von 1 µm bis 1 mm, insbesondere von 5 µm bis 50 µm. Das Trägerelement umfasst insbesondere eine PET-Folie mit einer Dicke von 5 µm bis 50 µm.

Das Trägerelement verleiht dem Heizmodul vorteilhafterweise eine ausreichende mechanische Stabilität, damit das Heizmodul bei seiner Herstellung, Weiterverarbeitung oder Benutzung nicht beschädigt wird.

Das Heizmodul umfasst vorzugsweise zumindest eine, bevorzugt flexible, Verkapselungsschicht zum Schutz zumindest der zumindest einen Heizschicht, der zumindest einen Energiespeicherschicht und/oder der zumindest einen Photovoltaikschicht vor Umwelteinflüssen, insbesondere vor Feuchtigkeit und/oder mechanischen Belastungen.

Die Verkapselungsschicht umfasst beispielsweise einen Kunststoff, insbesondere PET, ein Polyimid, PMMA und/oder ein Polycarbonat.

Das Trägerelement und/oder die Verkapselungsschicht ist bevorzugt zumindest abschnittsweise transluzent, insbesondere transparent. Dies ist besonders vorteilhaft, um durchlässig für das von der zumindest einen Photovoltaikschicht aufgenommene Licht oder von einer Leuchtschicht abgegebene Licht zu sein.

Das Heizmodul umfasst vorzugsweise zumindest eine entlang der Heizmodulebene ausgerichtete, flächige, bevorzugt flexible, Induktionsschicht zum induktiven Laden eines an dem Heizmodul angeordneten elektronischen Geräts, bevorzugt eines Computergeräts und/oder eines Elektrofahrzeugs, wobei die zumindest eine Induktionsschicht eine Mehrzahl von entlang der Heizmodulebene ausgerichteten Materiallagen mit voneinander unterschiedlichen Materialzusammensetzungen umfasst.

Mit der Induktionsschicht kann das elektronische Gerät kabellos aufgeladen werden, sodass das Heizmodul eine weitere Funktionalität bereitstellt, ohne dafür wesentlich mehr Platz zu beanspruchen oder zusätzliche Installationsarbeiten zu erfordern. Insbesondere kann bei einer Anordnung des Heizmoduls in einem Boden eines Parkplatzes das bisher sehr unpraktische Aufladen von Elektrofahrzeugen mit Hilfe der Induktionsschicht des Heizmoduls wesentlich vereinfacht werden.

Die Erfindung betrifft einen Flach-Heizkörper zum Beheizen eines Raumes, wobei der Flach-Heizkörper zumindest ein erfindungsgemäßes Heizmodul umfasst. Durch ein erfindungsgemäßes Heizmodul lässt sich ein besonders platzsparender, effizienter und vielseitiger Flach-Heizkörper schaffen. Weiterhin ergeben sich daraus die bereits zum Heizmodul beschriebenen Vorteile und Ausgestaltungsmöglichkeiten.

Die Erfindung betrifft eine Pflasterplatte zum Pflastern einer Verkehrsfläche, wobei die Pflasterplatte einen Plattenkorpus mit zumindest einer Aussparung umfasst, wobei in der zumindest einen Aussparung zumindest ein erfindungsgemäßes Heizmodul angeordnet ist.

Für Kommunen und private Eigentümer ist es mit erheblichem personellem und materiellem Aufwand verbunden, gepflasterte Verkehrsflächen, beispielsweise Gehwege, Radwege, Straßen, Parkplätze und andere Plätze im Winter von Schnee und Eis zu befreien. Außerdem führen die dazu häufig verwendeten Taumittel, insbesondere Streusalz, zu verstärkter Korrosion von Fahrzeugen und Verätzungen von Tieren und Pflanzen. Durch eine gezielte Beheizung der Verkehrsflächen mit dem Heizmodul können diese vorteilhafterweise ohne personellen und materiellen Aufwand und ohne Einsatz von Taumitteln von Schnee und Eis freigehalten werden.

Wenn das Heizmodul eine Photovoltaikschicht umfasst, ergibt sich daraus der zusätzliche Vorteil, dass die Zusatzkosten einer Pflasterplatte mit Heizmodul gegenüber einer fachüblichen Pflasterplatte durch Verkauf oder Eigennutzung der gewonnenen elektrischen Energie ausgeglichen oder sogar überkompensiert werden können. Außerdem können die ökologischen Nachteile gepflasterter Verkehrsflächen, insbesondere durch die von ihnen verursachte Bodenversiegelung, durch die Gewinnung erneuerbarer Energie zumindest teilweise ausgeglichen werden.

Der Plattenkorpus kann eine beliebige, für fachübliche Pflasterplatten bekannte Form und/oder Größe haben, insbesondere kann der Plattenkorpus im Wesentlichen quaderförmig sein.

Der Plattenkorpus kann beliebige, für fachübliche Pflasterplatten bekannte Materialien umfassen. Insbesondere kann der Plattenkorpus einen Kunststein und/oder einen Kunststoff, vorzugsweise ein Recycling-Verbundmaterial, umfassen.

Die Verwendung eines wiederverwerteten Rohstoffs in Form eines Recycling-Verbundmaterials verbessert die Umweltverträglichkeit im Verhältnis zu üblichen Materialien aus Primärrohstoffen erheblich. Zu Recycling-Verbundmaterialien zählen auch Kunststoffe, die aus wiederverwertbarem Hausmüll, insbesondere Verpackungsmüll gewonnen werden. Recycling-Verbundmaterialien aus Verpackungsmüll wurden beispielsweise bereits für Hochwasser-Schutzwände (DE 20 2004 008 412 U1, DE 20 2004 012 013 U1), Fahrbahnelemente (DE 9 406 259 U1) oder Lärmschutzwände (DE 10 2007 053 614 A1) eingesetzt.

Die Pflasterplatte umfasst vorzugsweise zumindest ein flächiges, entlang der Heizmodulebene des zumindest einen Heizmoduls ausgerichtetes, zumindest abschnittsweise transluzentes, insbesondere transparentes, Deckelement zum Schutz des zumindest einen Heizmoduls, wobei das zumindest einen Heizmodul von dem Plattenkorpus und dem zumindest einen Deckelement zumindest flüssigkeitsdicht umschlossen ist.

Das Deckelement schützt das Heizmodul vorteilhafterweise vor mechanischen Belastungen und vor Fremdstoffen, insbesondere vor Regenwasser und darin suspendierten oder gelösten Stoffen.

Das Deckelement kann beispielsweise einen Kunststoff umfassen, der auf das Heizmodul in die Aussparung gegossen ist. Das Deckelement kann beispielsweise eine auf dem Heizmodul in der Aussparung angeordnete Glasplatte umfassen, die mit einem Dichtmittel, insbesondere mit einem Dichtring, flüssigkeitsdicht mit dem Plattenkorpus verbunden ist.

Die Pflasterplatte umfasst vorzugsweise zumindest einen Sensor zur automatischen Steuerung der zumindest einen Heizschicht und/oder einer Leuchtschicht des Heizmoduls, wobei der zumindest eine Sensor einen Temperatursensor, einen Helligkeitssensor und/oder einen Präsenzsensor, bevorzugt einen Radarsensor und/oder Infrarotsensor, umfasst.

Mit Hilfe eines Temperatursensors kann die Heizschicht vorteilhafterweise automatisch so gesteuert werden, dass eine Vereisung der Pflasterplatte mit minimalem Energieverbrauch verhindert wird.

Mit Hilfe eines Helligkeitssensors kann die Leuchtschicht vorteilhafterweise automatisch genau dann aktiviert werden, wenn eine geringe Umgebungshelligkeit dies erfordert, sodass der Energieverbrauch minimiert wird.

Mit Hilfe eines Helligkeitssensors kann die Leuchtschicht vorteilhafterweise automatisch genau dann aktiviert werden, wenn eine die Pflasterplatte begangen oder befahren wird, sodass der Energieverbrauch minimiert wird. Ein Radarsensor und ein Infrarotsensor haben gegenüber anderen Präsenzsensoren, beispielsweise Drucksensoren, den Vorteil, dass sie keine beweglichen Teile enthalten und daher besonders langlebig sind. Insbesondere wird ein flüssigkeitsdichter Einschluss des Heizmoduls nicht durch eine Bewegung beweglicher Teile gefährdet.

Die Erfindung betrifft ein Pflastersystem zum Pflastern einer Verkehrsfläche, umfassend eine Vielzahl von erfindungsgemäßen Pflasterplatten und zumindest ein Buskabel zur zentralen Energieversorgung und/oder Steuerung zumindest der Heizschichten und/oder Leuchtschichten der Pflasterplatten, wobei jede der Pflasterplatten zumindest einen Busstecker zur Verbindung der Heizschichten und/oder Leuchtschichten der Pflasterplatten mit dem zumindest einen Buskabel umfasst.

Die Pflasterplatten und das Buskabel sind vorzugsweise zur Energieversorgung und/oder Steuerung mit einem Niedervolt-System, insbesondere mit einer Spannung von Maximal 60 V, ausgelegt. Ein Niedervolt-System hat den Vorteil, dass es auch von Personen ohne spezielle Kenntnisse im Bereich der Elektroinstallation, beispielsweise von Pflasterern, gefahrlos installiert werden kann.

Die Steuerung kann vorteilhafterweise von einem zentralen Steuergerät, insbesondere mit einer mit einer Anzahl von zentralen Sensoren und/oder automatisch, erfolgen. Daraus ergibt sich der Vorteil, dass nicht jede einzelne Pflasterplatte mit Sensoren und/oder einem Steuergerät ausgestattet sein muss, wodurch sich die Installationskosten reduzieren.

Die zentralen Sensoren können beispielsweise so ausgestaltet sein wie zuvor zu den Sensoren der erfindungsgemäßen Pflasterplatte beschrieben.

Der Busstecker ist vorzugsweise verpolungssicher ausgestaltet, um die Installation zu vereinfachen. Der Busstecker ist vorzugsweise verriegelbar, um ein unbeabsichtigtes Lösen von der Pflasterplatte, beispielsweise durch Erschütterungen, wenn die Pflasterplatte befahren wird, zu verhindern. Zum Schutz vor Korrosion und Kurzschlüssen ist der Busstecker vorzugsweise wasserdicht ausgestaltet.

Die Erfindung betrifft ein Verfahren zur Herstellung eines erfindungsgemäßen Heizmoduls. Das Verfahren umfasst zumindest folgende Schritte, insbesondere in der genannten Reihenfolge:
a. Bereitstellen eines flächigen Trägerelements für das Heizmodul und
b. Siebdrucken der zumindest einen Heizschicht und der zumindest einen Energiespeicherschicht und/oder der zumindest einen Photovoltaikschicht, bevorzugt zumindest einer Leuchtschicht, bevorzugt zumindest einer Induktionsschicht, bevorzugt zumindest einer Isolierschicht und bevorzugt zumindest einer Verkapselungsschicht des Heizmoduls auf das Trägerelement.

Das Trägerelement kann insbesondere wie zuvor beschrieben ausgestaltet sein.

Die Schichten können insbesondere wie zuvor beschrieben ausgestaltet sein. Vorzugsweise werden alle Schichten des Heizmoduls durch Siebdrucken hergestellt. Insbesondere können auch zum Betrieb des Heizmoduls notwendige elektrische Verbindungen zwischen den Schichten und/oder innerhalb der Schichten des Heizmoduls durch Siebdrucken hergestellt werden. Besonders bevorzugt wird das gesamte Heizmodul oder das gesamte Heizmodul bis auf das Trägerelement durch Siebdrucken hergestellt.

Die Materialien zur Erzeugung der Schichten können als Pasten bereitgestellt werden, welche mit einem Siebdruckverfahren aufgebracht werden. Ein besonderer Vorteil des Siebdruckverfahrens ist, dass die Schichten sehr schnell und kostengünstig aufgetragen werden können. Geschwindigkeiten von bis zu 400 m² pro Stunde sind mit einer entsprechenden Druckmaschine möglich.

Das Verfahren umfasst vorzugsweise ein Härten zumindest einer Schicht des Heizmoduls durch ein Bestrahlen der Schicht mit infrarotem Licht, bevorzugt während einer Bestrahlungsdauer von 0,1 s bis 100 s, besonders bevorzugt von 1 s bis 10 s. Das Härten ermöglicht es, weitere Schichten ohne zusätzliche Wartezeit direkt auf die gehärtete Schicht aufzubringen, ohne dass die gehärtete Schicht dadurch beschädigt wird. Das Heizmodul kann somit besonders schnell und kostengünstig hergestellt werden.

Das Bestrahlen mit infrarotem Licht hat den Vorteil, dass die Schichten dadurch kontaktlos und besonders schnell erhitzt und dadurch gehärtet werden können.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische Schnittdarstellung senkrecht zur Heizmodulebene einer erfindungsgemäßen Pflasterplatte.
Figur 2 zeigt eine schematische Schnittdarstellung senkrecht zur Heizmodulebene eines erfindungsgemäßen Heizmoduls.
Figur 3 zeigt eine schematische Schnittdarstellung senkrecht zur Heizmodulebene eines weiteren erfindungsgemäßen Heizmoduls.
Figur 4 zeigt eine schematische Schnittdarstellung senkrecht zur Heizmodulebene eines weiteren erfindungsgemäßen Heizmoduls.
Figur 5 zeigt eine schematische Schnittdarstellung senkrecht zur Heizmodulebene einer Leuchtschicht eines erfindungsgemäßen Heizmoduls.
Figur 6 zeigt eine schematische Schnittdarstellung senkrecht zur Heizmodulebene einer Induktionsschicht eines erfindungsgemäßen Heizmoduls.
Figur 7 zeigt eine schematische Schnittdarstellung senkrecht zur Heizmodulebene einer Heizschicht eines erfindungsgemäßen Heizmoduls.
Figur 8 zeigt eine schematische Schnittdarstellung senkrecht zur Heizmodulebene einer Energiespeicherschicht eines erfindungsgemäßen Heizmoduls.
Figur 9 zeigt eine schematische Schnittdarstellung senkrecht zur Heizmodulebene einer Photovoltaikschicht eines erfindungsgemäßen Heizmoduls.

### Fig.1

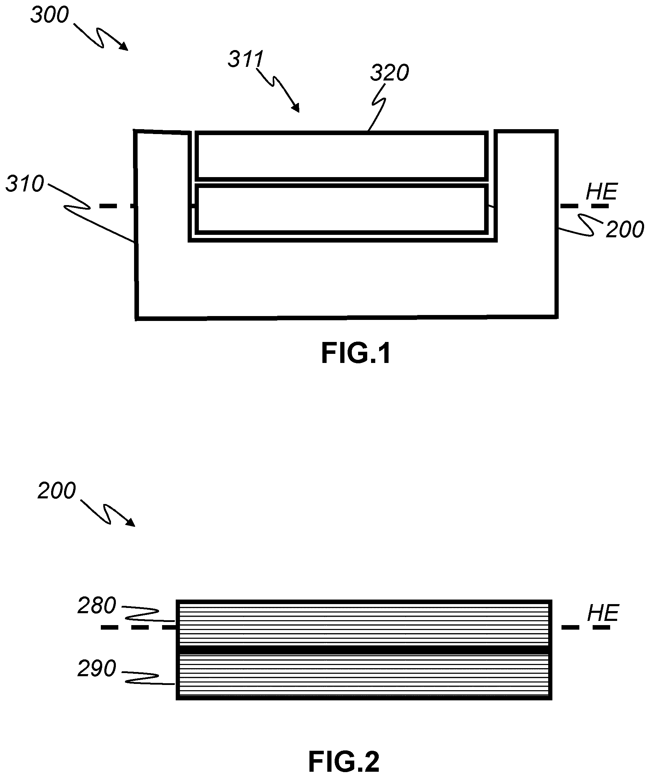

Figur 1 zeigt eine schematische Schnittdarstellung senkrecht zur Heizmodulebene HE einer erfindungsgemäßen Pflasterplatte 300. Die Pflasterplatte 300 umfasst einen Plattenkorpus 310 mit einer Aussparung 311, wobei in der Aussparung 311 ein erfindungsgemäßes Heizmodul 200 angeordnet ist.

Die Pflasterplatte 300 umfasst ein flächiges, entlang der Heizmodulebene HE des Heizmoduls 200 ausgerichtetes, zumindest abschnittsweise transluzentes Deckelement 320 zum Schutz des Heizmoduls 200, wobei das Heizmodul 200 von dem Plattenkorpus 310 und dem zumindest einen Deckelement 320 flüssigkeitsdicht umschlossen ist.

Das Deckelement 320 umfasst beispielsweise einen transparenten Kunststoff, der mit dem Plattenkorpus 310 vergossen ist.

### Fig.2

Figur 2 zeigt eine schematische Schnittdarstellung senkrecht zur Heizmodulebene HE eines erfindungsgemäßen Heizmoduls 200. Das Heizmodul 200 erstreckt sich flächig entlang der Heizmodulebene HE und umfasst eine entlang der Heizmodulebene HE ausgerichtete, flächige Heizschicht 290 zur Beheizung einer Umgebung des Heizmoduls 200 und eine flächige, entlang der Heizmodulebene HE ausgerichtete Photovoltaikschicht 280 zur Gewinnung elektrischer Energie.

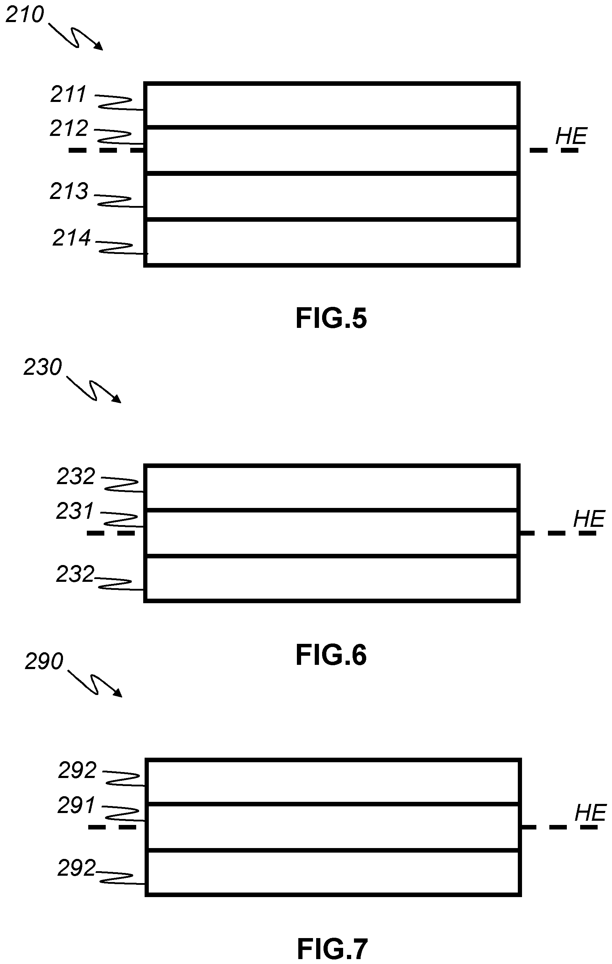

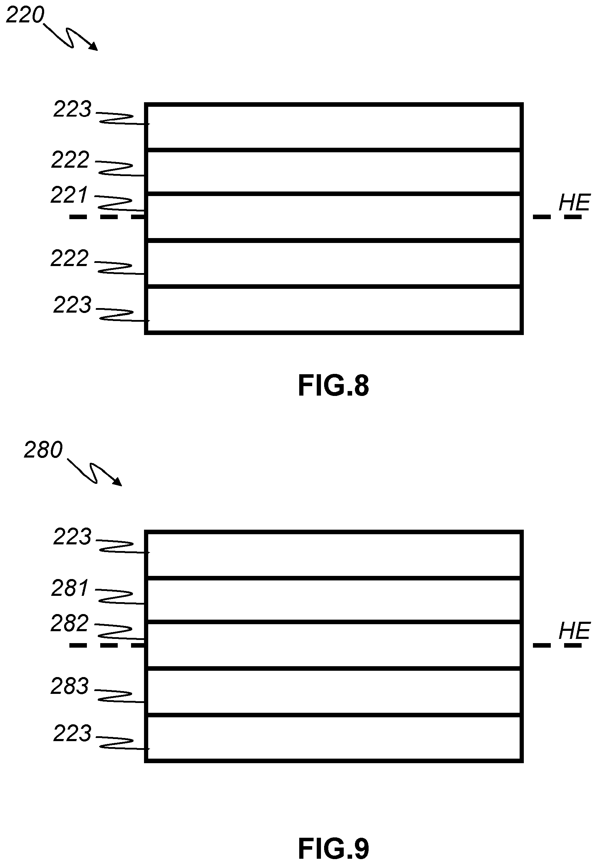

Die Heizschicht 290 und die Photovoltaikschicht 280 umfassen jeweils eine Mehrzahl von entlang der Heizmodulebene HE ausgerichteten Materiallagen (durch Schraffur dargestellt) mit voneinander unterschiedlichen Materialzusammensetzungen. Jeweils ein möglicher Aufbau der Heizschicht 290 und der Photovoltaikschicht 280 ist in den Figuren 7 und 9 gezeigt.

Zum Betrieb des Heizmoduls 200 notwendige elektrische Verbindungen zwischen den Schichten und/oder innerhalb der Schichten des Heizmoduls 200 sind hier und in den folgenden Figuren der Übersichtlichkeit halber nicht dargestellt.

### Fig.3

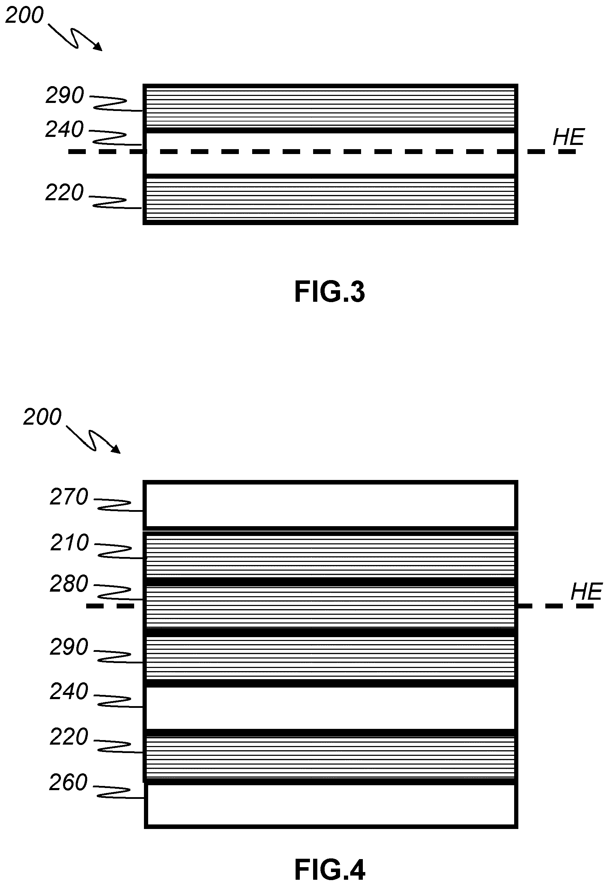

Figur 3 zeigt eine schematische Schnittdarstellung senkrecht zur Heizmodulebene HE eines erfindungsgemäßen Heizmoduls 200. Das Heizmodul 200 erstreckt sich flächig entlang der Heizmodulebene HE und umfasst eine entlang der Heizmodulebene HE ausgerichtete, flächige Heizschicht 290 zur Beheizung einer Umgebung des Heizmoduls 200 und eine entlang der Heizmodulebene HE ausgerichtete, flächige Energiespeicherschicht 220 zur Speicherung elektrischer Energie, wobei zwischen der Heizschicht 290 und der Energiespeicherschicht 220 eine entlang der Heizmodulebene HE ausgerichtete, flächige thermische Isolierschicht 240 angeordnet ist.

Die Isolierschicht 240 umfasst beispielsweise ein Calcium-Silikat, Chitosan und einen hitzebeständigen Binder und hat beispielsweise eine Schichtdicke senkrecht zur Heizmodulebene HE von 40 µm bis 100 µm.

Die Heizschicht 290 und die Energiespeicherschicht 220 umfassen jeweils eine Mehrzahl von entlang der Heizmodulebene HE ausgerichteten Materiallagen (durch Schraffur dargestellt) mit voneinander unterschiedlichen Materialzusammensetzungen. Jeweils ein möglicher Aufbau der Heizschicht 290 und der Energiespeicherschicht 220 ist in den Figuren 7 und 8 gezeigt.

### Fig.4

Figur 4 zeigt eine schematische Schnittdarstellung senkrecht zur Heizmodulebene HE eines weiteren erfindungsgemäßen Heizmoduls 200.

Zusätzlich zu den in Figur 2 gezeigten Schichten umfasst das Heizmodul 200 folgende weitere Schichten:
Das Heizmodul 200 umfasst eine entlang der Heizmodulebene HE ausgerichtete, flächige, Leuchtschicht 210 zur Beleuchtung einer Umgebung des Heizmoduls 200, wobei die Leuchtschicht 210 eine Mehrzahl von entlang der Heizmodulebene HE ausgerichteten Materiallagen (durch Schraffur dargestellt) mit voneinander unterschiedlichen Materialzusammensetzungen umfasst.

Die Leuchtschicht 210 ist beispielsweise an der der Heizschicht 290 abgewandten Seite der Photovoltaikschicht 280 angeordnet. Ein möglicher Aufbau der Leuchtschicht 210 ist in Figur 5 gezeigt.

Das Heizmodul 200 umfasst eine entlang der Heizmodulebene HE ausgerichtete, flächige Energiespeicherschicht 220 zur Speicherung elektrischer Energie, wobei zwischen der Heizschicht 290 und der Energiespeicherschicht 220 eine entlang der Heizmodulebene HE ausgerichtete, flächige thermische Isolierschicht 240 angeordnet ist.

Die Energiespeicherschicht 220 ist beispielsweise an der der Photovoltaikschicht 280 abgewandten Seite der Heizschicht 290 angeordnet.

Die Isolierschicht 240 ist beispielsweise wie zu Figur 3 beschrieben ausgestaltet.

Die Heizschicht 290 und die Energiespeicherschicht 220 umfassen jeweils eine Mehrzahl von entlang der Heizmodulebene HE ausgerichteten Materiallagen (durch Schraffur dargestellt) mit voneinander unterschiedlichen Materialzusammensetzungen. Jeweils ein möglicher Aufbau der Heizschicht 290 und der Energiespeicherschicht 220 ist in den Figuren 7 und 8 gezeigt.

Das Heizmodul 200 umfasst ein sich flächig entlang der Heizmodulebene HE erstreckendes Trägerelement 260, beispielsweise einen PET-Folie, auf das zumindest die Schichten des Heizmoduls 200, beispielsweise durch Siebdruck, aufgebracht sind.

Das Heizmodul 200 umfasst eine Verkapselungsschicht 270 zum Schutz der übrigen Schichten des Heizmoduls 200 vor Umwelteinflüssen, wobei beispielsweise die Verkapselungsschicht 270 zumindest abschnittsweise transluzent ist. Die Verkapselungsschicht 270 besteht beispielsweise aus einem transparenten Kunststoff, insbesondere aus PET.

Die Reihenfolge der Schichten des Heizmoduls 200 ist beispielsweise senkrecht zu Heizmodulebene HE: Trägerelement 260, Energiespeicherschicht 220, Isolierschicht 240, Heizschicht 290, Photovoltaikschicht 280, Leuchtschicht 210, Verkapselungsschicht 270.

### Fig.5

Figur 5 zeigt eine schematische Schnittdarstellung senkrecht zur Heizmodulebene HE einer beispielsweise als OLED ausgestalteten Leuchtschicht 210 eines erfindungsgemäßen Heizmoduls 200, umfassend mehrere entlang der Heizmodulebene HE ausgerichtete Materiallagen mit voneinander unterschiedlichen Materialzusammensetzungen.

Die dargestellte Leuchtschicht 210 umfasst beispielsweise eine Anodenlage 211, bestehend beispielsweise aus Indium-Zinnoxid, und eine sich daran anschließenden Lochleitungslage 212. An die Lochleitungslage 212 schließt sich eine Farbstofflage 213 an, die einen organischen Farbstoff enthält. Den Abschluss der dargestellten Leuchtschicht 210 bildet eine Kathodenlage 214, bestehend aus einem Metall, wie zum Beispiel Calcium oder Barium. Der Farbstoff kann beispielsweise ein Derivat von Poly(p-phenylen-vinyl) umfassen.

### Fig.6

Figur 6 zeigt eine schematische Schnittdarstellung senkrecht zur Heizmodulebene HE einer Induktionsschicht 230 eines erfindungsgemäßen Heizmoduls 200, umfassend mehrere entlang der Heizmodulebene HE ausgerichtete Materiallagen mit voneinander unterschiedlichen Materialzusammensetzungen.

Die dargestellte Induktionsschicht 230 umfasst beispielsweise eine Induktionsspule 231, beispielsweise aus einem Metall, und eine elektrisch isolierende Ummantelung 232, beispielsweise aus einem Kunststoff, zumindest senkrecht zur Heizmodulebene HE über und unter der Induktionsspule 231.

### Fig.7

Figur 7 zeigt eine schematische Schnittdarstellung senkrecht zur Heizmodulebene HE einer Heizschicht 290 eines erfindungsgemäßen Heizmoduls 200, umfassend mehrere entlang der Heizmodulebene HE ausgerichtete Materiallagen mit voneinander unterschiedlichen Materialzusammensetzungen.

Die dargestellte Heizschicht 290 umfasst beispielsweise eine Anzahl von Leiterbahnen 291, beispielsweise aus einem Metall, und jeweils eine elektrisch isolierende Isolierlage 292, beispielsweise aus einem Kunststoff, senkrecht zur Heizmodulebene HE über und unter den Leiterbahnen 291.

### Fig.8

Figur 8 zeigt eine schematische Schnittdarstellung senkrecht zur Heizmodulebene HE einer Energiespeicherschicht 220 eines erfindungsgemäßen Heizmoduls 200, umfassend mehrere entlang der Heizmodulebene HE ausgerichtete Materiallagen mit voneinander unterschiedlichen Materialzusammensetzungen.

Die beispielsweise als Festkörperakkumulator ausgebildete Energiespeicherschicht 220 umfasst zum Beispiel zwei Elektrodenlagen 222, dazwischen eine Separatorlage 221 mit einem Elektrolyten und an den Außenseiten je eine als elektrischer Isolator ausgebildete Verkapselungslage 223, beispielsweise aus einem Kunststoff.

Die Elektrodenlage 222 umfassen beispielsweise Kohlenstoff und/oder ein elektrisch leitfähiges Polymer. Die Verkapselungslagen 223 umfassen beispielsweise einen elektrisch isolierenden Kunststoff. Die Separatorlage 221 umfasst beispielsweise einen für Ionen leitenden porösen Kunststoff als polymeren Elektrolyt.

### Fig.9

Figur 9 zeigt eine schematische Schnittdarstellung senkrecht zur Heizmodulebene HE einer Photovoltaikschicht 280 eines erfindungsgemäßen Heizmoduls 200, umfassend mehrere entlang der Heizmodulebene HE ausgerichtete Materiallagen mit voneinander unterschiedlichen Materialzusammensetzungen.

Die Photovoltaikschicht 280 ist beispielsweise als Dünnschichtsolarzelle ausgestaltet, umfassend beispielsweise mikrokristallines Silicium (µc-Si:H) als photoaktives Material.

Die Photovoltaikschicht 280 umfasst beispielsweise senkrecht zur Heizmodulebene HE übereinander eine transluzente Frontelektrodenlage 281 und danach eine Photoaktivlage 282 mit dem photoaktiven Material und danach eine Backelektrodenlage 283.

Den Abschluss der Photovoltaikschicht 280 senkrecht zur Heizmodulebene HE bildet beispielsweise jeweils eine elektrisch isolierende Verkapselungslage 223, beispielsweise aus einem Kunststoff.

### Liste der Bezugszeichen

| | | | |
|---|---|---|---|
| 200 | Heizmodul | 260 | Trägerelement |
| 210 | Leuchtschicht | 270 | Verkapselungsschicht |
| 211 | Anodenlage | 280 | Photovoltaikschicht |
| 212 | Lochleitungslage | 281 | Frontelektrodenlage |
| 213 | Farbstofflage | 282 | Photoaktivlage |
| 214 | Kathodenlage | 283 | Backelektrodenlage |
| 220 | Energiespeicherschicht | 290 | Heizschicht |
| 221 | Separatorlage | 291 | Leiterbahn |
| 222 | Elektrodenlage | 292 | Isolierlage |
| 223 | Verkapselungslage | 300 | Pflasterplatte |
| 230 | Induktionsschicht | 310 | Korpus |
| 231 | Induktionsspule | 311 | Aussparung |
| 232 | Ummantelung | 320 | Deckelement |
| 240 | Isolierschicht | HE | Heizmodulebene |

Weitere Ausführungsformen der vorliegenden Erfindung sind in den folgenden Items wiedergegeben:
[Item 1] Flächiges Heizmodul (200), wobei sich das Heizmodul (200) flächig entlang einer Heizmodulebene (HE) erstreckt,
   gekennzeichnet durch
   a. zumindest eine entlang der Heizmodulebene (HE) ausgerichtete, flächige Heizschicht (290) zur Beheizung einer Umgebung des Heizmoduls (200) und
   b. zumindest eine entlang der Heizmodulebene (HE) ausgerichtete, flächige Energiespeicherschicht (220) zur Speicherung elektrischer Energie,
      i. wobei zwischen der Heizschicht (290) und der Energiespeicherschicht (220) eine entlang der Heizmodulebene (HE) ausgerichtete, flächige thermische Isolierschicht (240) angeordnet ist, und/oder
   c. zumindest eine flächige, entlang der Heizmodulebene (HE) ausgerichtete Photovoltaikschicht (280) zur Gewinnung elektrischer Energie,
   d. wobei die zumindest eine Heizschicht (290) und die zumindest eine Energiespeicherschicht (220) und/oder die zumindest eine Photovoltaikschicht (280) jeweils eine Mehrzahl von entlang der Heizmodulebene (HE) ausgerichteten Materiallagen mit voneinander unterschiedlichen Materialzusammensetzungen umfassen.
[Item 2] Heizmodul (200) nach Item 1,
   dadurch gekennzeichnet, dass
   a. die zumindest eine Heizschicht (290) und die zumindest eine Energiespeicherschicht (220) und/oder die zumindest eine Photovoltaikschicht (280) senkrecht zur Heizmodulebene (HE) übereinander angeordnet sind, und/oder
   b. eine Schichtdicke der zumindest einen Heizschicht (290), der zumindest einen Energiespeicherschicht (220) und/oder der zumindest einen Photovoltaikschicht (280) senkrecht zur Heizmodulebene (HE) jeweils von 0,1 µm bis 1 mm, bevorzugt von 0,5 µm bis 0,2 mm, beträgt.
[Item 3] Heizmodul (200) nach Item 1 oder 2,
   dadurch gekennzeichnet, dass
   die zumindest eine Heizschicht (290), die zumindest eine Energiespeicherschicht (220), die zumindest eine thermische Isolierschicht (240) und/oder die zumindest eine Photovoltaikschicht (280), bevorzugt das gesamte Heizmodul (200), flexibel ausgestaltet ist.
[Item 4] Heizmodul (200) nach einem der Items 1 bis 3,
   dadurch gekennzeichnet, dass
   die Isolierschicht (240)
   a. ein Calcium-Silikat, Chitosan und einen hitzebeständigen Binder umfasst und/oder
   b. eine Schichtdicke von 10 µm bis 500 µm, bevorzugt von 40 µm bis 100 µm, aufweist.
[Item 5] Heizmodul (200) nach einem der Items 1 bis 4,
   gekennzeichnet durch
   a. zumindest eine entlang der Heizmodulebene (HE) ausgerichtete, flächige, bevorzugt flexible, Leuchtschicht (210) zur Beleuchtung einer Umgebung des Heizmoduls (200),
   b. wobei die Leuchtschicht (210) eine Mehrzahl von entlang der Heizmodulebene (HE) ausgerichteten Materiallagen mit voneinander unterschiedlichen Materialzusammensetzungen umfasst.
[Item 6] Heizmodul (200) nach Item 5,
   dadurch gekennzeichnet, dass die zumindest eine Photovoltaikschicht (280) und die zumindest eine Leuchtschicht (210) entlang der Heizmodulebene (HE) nebeneinander oder ineinander angeordnet sind.
[Item 7] Heizmodul (200) nach einem der Items 1 bis 6,
   dadurch gekennzeichnet, dass
   das Heizmodul (200)
   a) zumindest ein sich flächig entlang der Heizmodulebene (HE) erstreckendes, bevorzugt flexibles, Trägerelement (260) umfasst, auf das zumindest die zumindest eine Heizschicht (290), die zumindest eine Energiespeicherschicht (220) und/oder die zumindest eine Photovoltaikschicht (280) aufgebracht sind, und/oder
   b) zumindest eine, bevorzugt flexible, Verkapselungsschicht (270) zum Schutz zumindest der zumindest einen Heizschicht (290), der zumindest einen Energiespeicherschicht (220) und/oder der zumindest einen Photovoltaikschicht (280) vor Umwelteinflüssen umfasst,
   c) wobei das Trägerelement (260) und/oder die Verkapselungsschicht (270) bevorzugt zumindest abschnittsweise transluzent ist.
[Item 8] Heizmodul (200) nach einem der Items 1 bis 7,
   gekennzeichnet durch
   a. zumindest eine entlang der Heizmodulebene (HE) ausgerichtete, flächige, bevorzugt flexible, Induktionsschicht (230) zum induktiven Laden eines an dem Heizmodul (200) angeordneten elektronischen Geräts, bevorzugt eines Computergeräts und/oder eines Elektrofahrzeugs,
   b. wobei die zumindest eine Induktionsschicht (230) eine Mehrzahl von entlang der Heizmodulebene (HE) ausgerichteten Materiallagen mit voneinander unterschiedlichen Materialzusammensetzungen umfasst.
[Item 9] Flach-Heizkörper zum Beheizen eines Raumes,
   gekennzeichnet durch
   zumindest ein Heizmodul (200) nach einem der Items 1 bis 8.
[Item 10] Pflasterplatte (300) zum Pflastern einer Verkehrsfläche,
   gekennzeichnet durch
   einen Plattenkorpus (310) mit zumindest einer Aussparung (311), wobei in der zumindest einen Aussparung (311) zumindest ein Heizmodul (200) nach einem der Items 1 bis 8 angeordnet ist.
[Item 11] Pflasterplatte (300) nach Item 10,
   gekennzeichnet durch
   a. zumindest ein flächiges, entlang der Heizmodulebene (HE) des zumindest einen Heizmoduls (200) ausgerichtetes, zumindest abschnittsweise transluzentes Deckelement (320) zum Schutz des zumindest einen Heizmoduls (200),
   b. wobei das zumindest eine Heizmodul (200) von dem Plattenkorpus (310) und dem zumindest einen Deckelement (320) zumindest flüssigkeitsdicht umschlossen ist.
[Item 12] Pflasterplatte (300) nach Item 10 oder 11,
   gekennzeichnet durch
   a. zumindest einen Sensor (340) zur automatischen Steuerung der zumindest einen Heizschicht (290) und/oder Leuchtschicht (210) des Heizmoduls (200),
   b. wobei der zumindest einen Sensor (340) einen Temperatursensor, einen Helligkeitssensor und/oder einen Präsenzsensor, bevorzugt einen Radarsensor und/oder Infrarotsensor, umfasst.
[Item 13] Pflastersystem zum Pflastern einer Verkehrsfläche,
   gekennzeichnet durch
   a. eine Vielzahl von Pflasterplatten (300) nach einem der Items 10 bis 12 und
   b. zumindest ein Buskabel zur zentralen Energieversorgung und/oder Steuerung der Heizschichten (290) und/oder Leuchtschichten (210) der Pflasterplatten (300),
   c. wobei jede der Pflasterplatten (300) zumindest einen Busstecker zur Verbindung der Heizschichten (290) und/oder Leuchtschichten (210) der Pflasterplatten (300) mit dem zumindest einen Buskabel umfasst.
[Item 14] Verfahren zur Herstellung eines Heizmoduls (200) nach einem der Items 1 bis 8,
   gekennzeichnet durch folgende Schritte
   a. Bereitstellen eines flächigen Trägerelements (260) für das Heizmodul (200) und
   b. Siebdrucken der zumindest einen Heizschicht (290) und der zumindest einen Energiespeicherschicht (220) und/oder der zumindest einen Photovoltaikschicht (280), bevorzugt zumindest einer Leuchtschicht (210), bevorzugt zumindest einer Induktionsschicht (230), bevorzugt zumindest einer Isolierschicht (240) und bevorzugt zumindest einer Verkapselungsschicht (270) des Heizmoduls (200) auf das Trägerelement (260).
[Item 15] Verfahren nach Item 14,
   gekennzeichnet durch den Schritt:
   Härten zumindest einer Schicht (210, 220, 230, 240, 270, 280, 290) des Heizmoduls (200) durch ein Bestrahlen der Schicht mit infrarotem Licht, bevorzugt während einer Bestrahlungsdauer von 0,1 s bis 100 s, besonders bevorzugt von 1 s bis 10 s.

## Patentansprüche

1. Flächiges Heizmodul (200), wobei sich das Heizmodul (200) flächig entlang einer Heizmodulebene (HE) erstreckt, das Heizmodul (200) umfassend
zumindest eine entlang der Modulebene (HE) ausgerichtete, flächige Heizschicht (290) zur Beheizung einer Umgebung des Moduls (200),
zumindest eine entlang der Modulebene (HE) ausgerichtete, flächige Energiespeicherschicht (220) zur Speicherung elektrischer Energie, und
zumindest eine entlang der Modulebene (HE) ausgerichtete, flächige Photovoltaikschicht (280) zur Gewinnung elektrischer Energie,
wobei die die zumindest eine Heizschicht (290), die zumindest eine Energiespeicherschicht (220), die zumindest eine Photovoltaikschicht (280) und das gesamte Heizmodul (200) flexibel ausgestaltet sind.

2. Heizmodul (200) nach Anspruch 1, wobei das Heizmodul (200) ein Trägerelement (260) umfasst, und wobei die zumindest eine Heizschicht (290), die zumindest eine Energiespeicherschicht (220) und/oder die zumindest eine Photovoltaikschicht (280) durch Siebdruck auf das Trägerelement (260) aufgebracht sind.

3. Heizmodul (200) nach Anspruch 1 oder 2, wobei die zumindest eine Heizschicht (290), die zumindest eine Photovoltaikschicht (280) und die zumindest eine Energiespeicherschicht (220) jeweils eine Mehrzahl von entlang der Modulebene (HE) ausgerichteten Materiallagen mit voneinander unterschiedlichen Materialzusammensetzungen umfassen.

4. Heizmodul (200) nach einem der vorangehenden Ansprüche, ferner umfassend zumindest eine entlang der Modulebene (HE) ausgerichtete, flächige Leuchtschicht (210) zur Beleuchtung einer Umgebung des Heizmoduls (200),
wobei die Leuchtschicht (210) insbesondere durch Siebdruck aufgebracht ist, und
wobei vorzugsweise die Leuchtschicht (210) eine Mehrzahl von entlang der Modulebene (HE) ausgerichteten Materiallagen mit voneinander unterschiedlichen Materialzusammensetzungen umfasst,
wobei ferner vorzugsweise die zumindest eine Photovoltaikschicht (280) und die zumindest eine Leuchtschicht (210) entlang der Modulebene (HE) des nebeneinander oder ineinander angeordnet sind.

5. Heizmodul (200) nach einem der vorangehenden Ansprüche, wobei die zumindest eine Heizschicht (290) und die zumindest eine Energiespeicherschicht (220) und/oder die zumindest eine Photovoltaikschicht (280) senkrecht zur Heizmodulebene (HE) übereinander angeordnet sind, und/oder
eine Schichtdicke der zumindest einen Heizschicht (290), der zumindest einen Energiespeicherschicht (220) und/oder der zumindest einen Photovoltaikschicht (280) senkrecht zur Heizmodulebene (HE) jeweils von 0,1 µm bis 1 mm, bevorzugt von 0,5 µm bis 0,2 mm, beträgt.

6. Heizmodul (200) nach einem der vorangehenden Ansprüche,
wobei zwischen der Heizschicht (290) und der Energiespeicherschicht (220) eine entlang der Modulebene (HE) ausgerichtete, flächige thermische Isolierschicht (240) angeordnet ist,
wobei die Isolierschicht (240) insbesondere durch Siebdruck aufgebracht ist, und
wobei die Isolierschicht (240) vorzugsweise ein Calcium-Silikat, Chitosan und einen hitzebeständigen Binder umfasst.

7. Heizmodul (200) nach einem der vorangehenden Ansprüche, ferner umfassend
zumindest eine Verkapselungsschicht (270) zum Schutz der zumindest einen Heizschicht (290), der zumindest einen Photovoltaikschicht (280) und der zumindest einen Energiespeicherschicht (220) vor Umwelteinflüssen,
wobei die Verkapselungsschicht (270) insbesondere zumindest abschnittsweise transluzent ist.

8. Heizmodul (200) nach einem der vorangehenden Ansprüche, wobei zumindest eine entlang der Heizmodulebene (HE) ausgerichtete, flächige Induktionsschicht (230) zum induktiven Laden eines an dem Heizmodul (200) angeordneten elektronischen Geräts, bevorzugt eines Computergeräts und/oder eines Elektrofahrzeugs,
wobei die zumindest eine Induktionsschicht (230) insbesondere eine Mehrzahl von entlang der Heizmodulebene (HE) ausgerichteten Materiallagen mit voneinander unterschiedlichen Materialzusammensetzungen umfasst.

9. Flach-Heizkörper zum Beheizen eines Raumes, der Flach-Heizkörper umfassend zumindest ein Heizmodul (200) nach einem der Ansprüche 1 bis 8.

10. Pflasterplatte (300), die Pflasterplatte (300) umfassend einen Plattenkorpus (310) mit zumindest einer Aussparung (311), wobei in der zumindest einen Aussparung (311) zumindest ein Heizmodul (200) nach einem der Ansprüche 1 bis 8 angeordnet ist.

11. Pflasterplatte (300) nach Anspruch 10, umfassend zumindest ein flächiges, entlang der Heizmodulebene (HE) des zumindest einen Heizmoduls (200) ausgerichtetes, zumindest abschnittsweise transluzentes Deckelement (320) zum Schutz des zumindest einen Heizmoduls (200), und
wobei das zumindest eine Heizmodul (200) von dem Plattenkorpus (310) und dem zumindest einen Deckelement (320) zumindest flüssigkeitsdicht umschlossen ist.

12. Pflasterplatte (300) nach Anspruch 10 oder 11, die Pflasterplatte (300) ferner umfassend
zumindest einen Sensor (340) zur automatischen Steuerung der zumindest einen Heizschicht (290) des Heizmoduls (200),
wobei der zumindest eine Sensor (340) einen Temperatursensor, einen Helligkeitssensor und/oder einen Präsenzsensor, bevorzugt einen Radarsensor und/oder Infrarotsensor, umfasst.

13. Pflastersystem, das Pflastersystem umfassend
eine Vielzahl von Pflasterplatten (300) nach einem der Ansprüche 10 bis 12 und
zumindest ein Buskabel zur zentralen Energieversorgung und/oder Steuerung der Heizschichten (290) der Pflasterplatten (300),
wobei jede der Pflasterplatten (300) zumindest einen Busstecker zur Verbindung der Heizschichten (290) der Pflasterplatten (300) mit dem zumindest einen Buskabel umfasst.

14. Verfahren zur Herstellung eines Heizmoduls (200), das Verfahren umfassend folgende Schritte
Bereitstellen eines flächigen Trägerelements (260) für das Heizmodul (200) und
Aufbringen der zumindest einen Heizschicht (290), der zumindest einen Energiespeicherschicht (220) und der zumindest einen Photovoltaikschicht (280) auf das Trägerelement,
wobei die zumindest eine Heizschicht (290), die zumindest eine Energiespeicherschicht (220) und/oder die zumindest eine Photovoltaikschicht (280), durch Siebdrucken auf das Trägerelement (260) aufgebracht ist.

15. Verfahren nach Anspruch 14, ferner umfassend den Schritt
Härten zumindest einer Schicht (210, 220, 230, 240, 270, 280, 290) des Heizmoduls (200) durch ein Bestrahlen der Schicht mit infrarotem Licht, bevorzugt während einer Bestrahlungsdauer von 0,1 s bis 100 s, besonders bevorzugt von 1 s bis 10 s.
